# EUROPEAN PATENT SPECIFICATION

(11) **EP 0 841 878 B1**
(45) Date of publication and mention of the grant of the patent: **12.11.2003**
(21) Application number: 95907952.6
(22) Date of filing: 23.12.1994
(51) Int. Cl.: A61C 8/00

(54) **DENTAL IMPLANT DEVICE**
ZAHNIMPLANTAT
DISPOSITIF D'IMPLANT DENTAIRE

(43) Date of publication of application: 20.05.1998
(73) Proprietor: Mena, Raul R., Plantation, FL 33324 (US)
(72) Inventor: Mena, Raul R., Plantation, FL 33324 (US)
(74) Representative: Powell, Stephen David
(86) International application number: US9414868
(87) International publication number: WO96019950

(56) References cited:
- US-A- 4 466 796
- US-A- 4 531 915
- US-A- 4 738 623
- US-A- 4 850 870
- US-A- 4 976 739
- US-A- 5 030 095
- US-A- 5 269 686

## Description

The present invention relates to dental implants.

Applicant believes that the closest reference corresponds to the implants sold by Stryker Dental Implants, Kalamazoo, MI 49001 and particularly, Stryker Fin Implant model nos. 260-135-008 and equivalents. However, this reference differs from the present invention because they fail to provide a termination having a multi-sided body (hexagonal portion) and a beveled portion adjacent thereto with the consequent compatible interface surface for engaging a prosthetic abutment free from debris traps. US 4,976,739 discloses an implant for attaching a prosthesis to a bone and having a threaded section, a thread block connected to the threaded section and a transversely enlarged flange section, a guide section, and a mounting opening extending through the guide, flange and thread block sections and into the threaded section. US 4,531,915 discloses a an embodiment of a dental implant comprising a centre post with a counterbore and a threaded bore for receiving a projection connected to the proximal end, with a plurality of fins extending radially outward along the centre post. In a different embodiment the counterbore is tapered. The disclosure of this document corresponds to the preamble of claim 1. None of these references teaches an anti-rotational mechanism for the abutment.

It is one of the primary objects of the present invention to provide an implant device that is free from debris traps or pockets where saliva, blood bacteria, soft tissue invagination or any other substances can be collected.

It is another object of the present invention to provide an implant device that includes a beveled portion for cooperative engagement with a cooperating abutment.

Still another object of the invention is to provide a versatile implant device to which different types of prosthetic abutments could be mounted.

Yet another object of this invention is to provide a hexagonal element that facilitates the application of the rotational force necessary to insert the implant in the bone and to prevent rotation of the abutment head on an individual or single tooth implant.

It is yet another object of this invention to provide such a device that is inexpensive to manufacture and maintain while retaining its effectiveness.

Further objects of the invention will be brought out in the following part of the specification, wherein detailed description is for the purpose of fully disclosing the invention without placing limitations thereon.

According to the present invention, there is provided a dental implant device comprising: form implant means adapted to be implanted in a user's jaw bone having an anchorage section and an engagement section and said anchorage section includes a shaft having means for engaging to said jaw bone, and said engagement section being integrally built on said anchorage section and further including a cylindrical portion having first and second ends and a beveled portion having a wide first end adjoining said second end of said cylindrical portion and a narrow second end, said anchorage section, said cylindrical portion and said bevelled portion all being coaxially disposed; and abutment means removably mounted to said form implant means, said engagement section including a centrally disposed tapered cavity and said abutment means includes a cooperating mating frustoconial post member having a distal and narrowest end, said first end of said cylindrical portion adjoining said anchorage section, and said first end of said bevelled portion having the same dimensions as said second end of said cylindrical portion characterised in that said second end of said bevelled portion adjoins a multi-face portion and in that said post member includes a threaded pin member coaxially and rigidly mounted to the distal and narrowest end of said post member and said cavity includes a threaded bottom portion for cooperatively receiving said pin member.

With the above and other related objects in view, the invention consists in the details of construction and combination of parts as will be more fully understood from the following description, when read in conjunction with the accompanying drawings in which:
Figure 1 represents a side elevational view of an example useful in explaining the present invention for a dental root form implant fixture of the threaded shaft type with an abutment having a smooth engagement tapered shaft.
Figure 2 represents a first embodiment of the present invention wherein the smooth engagement tapered shaft includes a threaded end, and the anchorage section is partially shown in cross-section taken along line 2 in Figure 5.
Figure 3 represents a side elevational view of a first alternate embodiment for a root implant fixture of the fin type.
Figure 4 is a partial representation of a second alternate embodiment for a cylinder form implant fixture of the helical groove type.
Figure 5 is a top view of the first embodiment.
Figure 6 shows an elevational view of a third alternate embodiment, with partial cross-sections, having a removable abutment head.
Figure 7 represents the components shown in Figure 6 after being assembled.

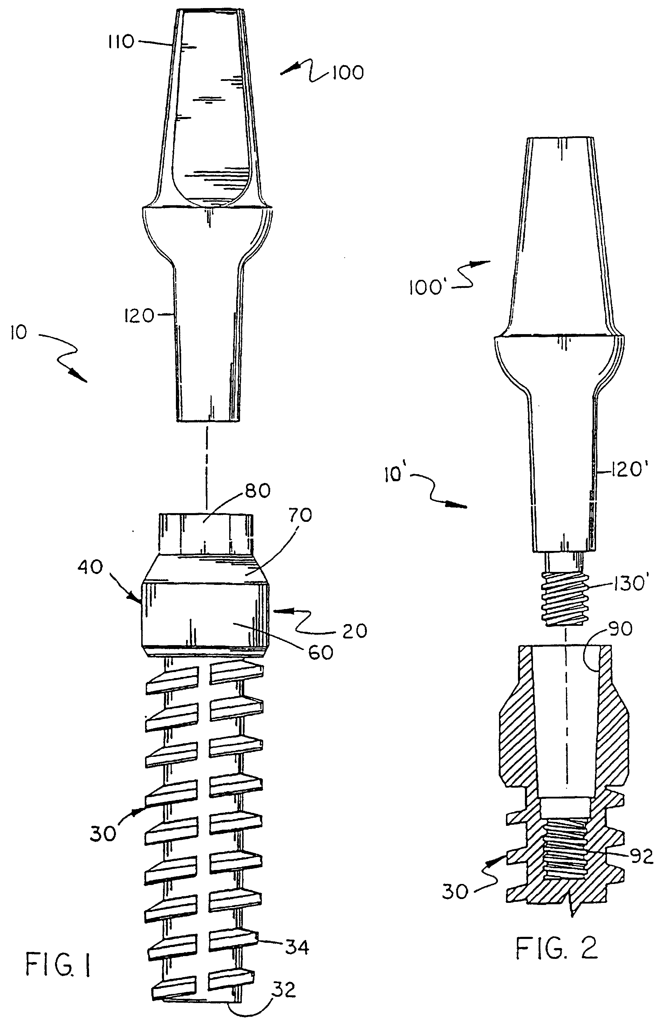

Referring now to Figure 1, where an example is generally referred to with numeral 10, it can be observed that it basically includes root firm implant fixture 20 and abutment member 100. Root form implant fixture 20 includes anchorage section 30 and engagement section (neck) 40.

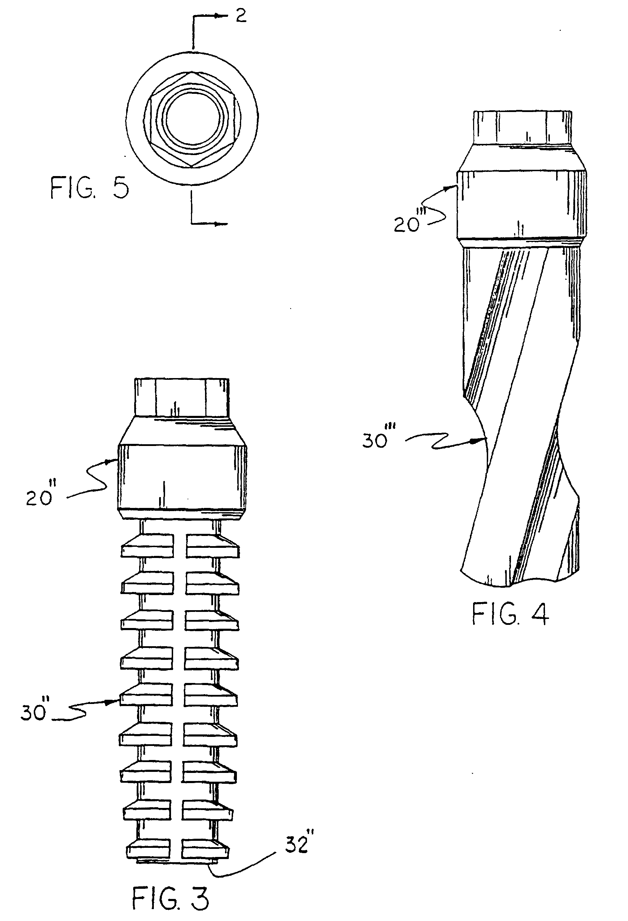

Anchorage section 30 includes shaft 32 with threads 34 having sufficient separation of its threads to permit the bone in which it is inserted to occupy the space in between for best anchorage results. Shaft 32 can also be of the type known in the arts as the fin type, as shown in Figure 3 under numeral 32" wherein several disks are rigidly, and positioned in a spaced apart parallel relationship with respect to each other, mounted to shaft 32". Another type of shaft 32" is the one shown in Figure 4 and it corresponds to a cylinder with a helical grooves.

As shown in Figure 1, engagement section 40 is integrally built at one of the ends of shaft 32 and it includes cylindrical portion 60, beveled portion 70 and multi-face portion 80, all adjacent to each other in that order. Multi-face portion 80 has a hexagonal shape, in the preferred embodiment.

Central and longitudinally extending cavity 90 extends through the center of cylindrical, beveled and multi-face portions 60; 70 and 80, as well as part of shaft 32, as best seen in Figure 2. In the example of Figure 1 as well as the embodiment shown in Figure 2, cavity 90 narrows down (tapers) as it extends toward anchorage section 30. At the end of cavity 90, in the embodiment shown in Figure 2, there is a threaded bottom part 92.

Abutment member 100 has head 100 with elongated post 120 that is built in, as seen in Figure 1. The angle of head 110 with respect to the longitudinal axis of member 100 varies depending on the correction for parallelism that may be necessary. In the Figures abutments have been shown with 0 degrees of connection to facilitate the description of the invention. Lack of parallelism is undesirable and it arises when fixtures 20 are not positioned parallel to each other. Elongated post 120, in the example shown in Figure 1, is smooth and bites against internal walls of central cavity 90 thereby locking it in place. The metal to metal biting engagement of post 120 and internal walls of cavity 90 provides a retention of abutment 100 and hermetic seal for any unoccupied space inside cavity 90n thereby preventing the collection of saliva, blood or any other decaying substance.

In Figure 2, abutment member 100' includes threaded pin 130' rigidly mounted at the distal end of post 120'. Threaded pin 130' cooperatively engages with threaded bottom part 92 of cavity 90.

The first and second alternate embodiments shown in Figures 3 and 4 for fixtures 20" and 20"" are basically similar to those shown in Figure 2 except that shafts 32" and 32"" of anchorage sections 30" and 30"" are of the fin and helical groove types, respectively.

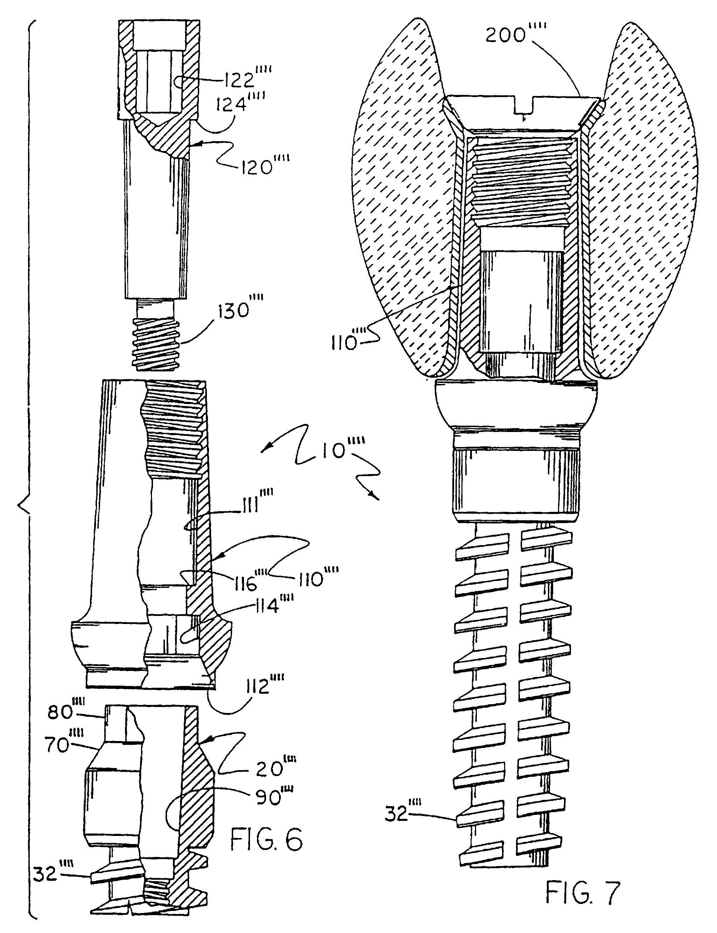

A third alternate embodiment is shown in Figure 6 and is generally referred to with numeral 10"". Root form implant fixture 20"" used with dental implant device 10"" is identical to the one used with devices 10 and 10'. Fixture 20"" can be of any type (threaded, fin or cylinder). Abutment head 110"" is removably mounted over fixture 20"" and in cooperative non-rational engagement thereon. Inwardly chamfered rim 112"" matingly comes in complementary abutting contact with beveled portion 70"". This flat face to face engagement of rim 112"" and beveled portion 70"" will create a hermetic seal that will prevent the infiltration of saliva, bacteria, exudate or soft tissue invagination or any other foreign bodies. Internal multi-faced socket 114"" similarly matingly and cooperatively engages with multi-face portion 80"", thereby preventing rotation of abutment 110".

Post 120"" is coaxially inserted through central opening 111"" of abutment head 110"" and pin member 130"" at one end protrudes through rim 112"" to engage with cavity 90"" in fixture 20"". This engagement is accomplished in the same manner as described for the preferred embodiment. The only difference being that post 120"" is also provided with an internal socket 122"" to permit rotating is and causing sleeve 124"" to come in contact with counterbore surface 116"", thereby holding abutment head 110"" down.

Screw member 200"" is designed to hold the prosthesis (fixed or removable) to abutment head 110"", as best seen in Figure 7.

## Claims

1. A dental implant device (10) comprising:
form implant means (20) adapted to be implanted in a user's jaw bone having an anchorage section (30) and an engagement section (40) and said anchorage section includes a shaft (32) having means (34) for engaging to said jaw bone, and said engagement section being integrally built on said anchorage section and further including a cylindrical portion (60) having first and second ends and a beveled portion (70) having a wide first end adjoining said second end of said cylindrical portion and a narrow second end, said anchorage section, said cylindrical portion and said bevelled portion all being coaxially disposed; and abutment means (100) removably mounted to said form implant means, said engagement section including a centrally disposed tapered cavity (90) and said abutment means including a cooperating mating frustoconial post member (120) having a distal and narrowest end, said first end of said cylindrical portion adjoining said anchorage section, and said first end of said bevelled portion having the same dimensions as said second end of said cylindrical portion **characterised in that** said second end of said bevelled portion adjoins a multi-face portion (80) and **in that** said post member (120') includes a threaded pin member (130') coaxially and rigidly mounted to the distal and narrowest end of said post member and said cavity includes a threaded bottom portion (92) for cooperatively receiving said pin member.

2. The dental implant device in claim 1 wherein said shaft (32) of said form implant means is threaded.

3. The dental impact device set forth in claim 1 wherein said shaft (32'') of said form implant means includes a plurality of fin members (30'') mounted thereto.

4. The dental implant device set forth in claim 1 wherein said shaft of said form implant means includes a helical groove (30''')

5. The dental implant device set forth in any preceding claim wherein said cylindrical portion (60) has a diameter that is larger than the diameter of said shaft (32).

## Patentansprüche

1. Zahnimplantat (10) mit:
einer Implantatfassungseinrichtung (20), die zum Implantieren in den Kieferknochen eines Benutzers aufgebaut ist, einen Verankerungsabschnitt (30) und einen Eingriffsabschnitt (40) besitzt, und wobei der Verankerungsabschnitt einen Schaft (32) mit einer Einrichtung (34) zum Eingriff in den Kieferknochen einschließt, und der Eingriffsabschnitt auf dem Verankerungsabschnitt als eine feste Einheit aufgebaut ist und außerdem einen zylindrischen Abschnitt (60) mit ersten und zweiten Enden und einen kegelförmigen Abschnitt (70) mit einem breiten ersten Ende benachbart zum zweiten Ende des zylindrischen Abschnitts und einem schmalen zweiten Ende einschließt, wobei der Verankerungsabschnitt, der zylindrische Abschnitt und der kegelförmige Abschnitt alle koaxial angeordnet sind; und einer auf der Implantatfassungseinrichtung (20) abnehmbar befestigten Widerlagereinrichtung, wobei der Eingriffsabschnitt eine mittig angeordnete konische Ausnehmung (90) und die Widerlagereinrichtung ein dazu passendes kegelstumpfförmiges Stabelement (120) einschließt, das ein distales und verengtes Ende besitzt, wobei das erste Ende des zylindrischen Abschnitts benachbart zum Verankerungsabschnitt und das erste Ende des kegelförmigen Abschnitts dieselben Abmessungen besitzen wie das zweite Ende des zylindrischen Abschnitts,
**dadurch gekennzeichnet,**
**dass** das zweite Ende des kegelförmigen Abschnitts einem mehrflächigen Abschnitt (80) benachbart ist, und
**dass** das Stabelement (120') ein mit einem Gewinde versehenes koaxial und steif auf dem distalen und verengten Ende des Stabelements befestigtes Stiftelement (130') einschließt und
**dass** die Ausnehmung einen mit einem Gewinde versehenen Bodenabschnitt (92) zum passenden Aufnehmen des Stiftelementes einschließt.

2. Zahnimplantat nach Anspruch 1, in welchem der Schaft (32) der Implantatfassungseinrichtung mit einem Gewinde versehen ist.

3. Zahnimplantat nach Anspruch 1, in welchem der Schaft (32") der Implantatfassungseinrichtung mehrere darauf befestigte Rippenelemente (30") einschließt.

4. Zahnimplantat nach Anspruch 1, in welchem der Schaft der Implantatfassungseinrichtung eine schraubenförmige Nut (30''') einschließt.

5. Zahnimplantat nach einem der vorstehenden Ansprüche, in welchem der zylindrische Abschnitt (60) einen Durchmesser besitzt, der größer ist als der Durchmesser des Schaftes (32).

## Revendications

1. Dispositif formant implant dentaire (10) comprenant :
un moyen formant implant de forme (20) adapté de manière à être implanté sur un os de mâchoire de l'utilisateur, présentant une section d'ancrage (30) et une section de couplage (40), ladite section d'ancrage comportant une tige (32) présentant un moyen (34) destiné à être couplé sur ledit os de mâchoire, ladite section de couplage étant construite de manière unitaire sur ladite section d'ancrage et comportant, en outre, une partie cylindrique (60) présentant des première et seconde extrémités et une partie chanfreinée (70) présentant une première extrémité large adjacente à ladite seconde extrémité de ladite partie cylindrique et une seconde extrémité étroite, ladite section d'ancrage, ladite partie cylindrique et la ladite partie chanfreinée étant toutes agencées de manière coaxiale ; et un moyen formant butée (100) monté de manière amovible sur ledit moyen formant implant de forme, ladite section de couplage comportant une cavité conique agencée de manière centrale (90) et ledit moyen formant butée comportant un élément formant colonne tronconique conjuguée (120) coopérant, présentant une extrémité distale et plus étroite, ladite première extrémité de ladite partie cylindrique étant adjacente à ladite section d'ancrage, et ladite première extrémité de ladite partie chanfreinée présentant les mêmes dimensions que ladite seconde extrémité de ladite partie cylindrique, **caractérisé en ce que** ladite seconde extrémité de ladite partie chanfreinée est adjacente à une partie à facettes multiples (80), et **en ce que** ledit élément formant colonne (120') comporte un élément formant broche fileté (130') monté de manière coaxiale et rigide sur l'extrémité distale et la plus étroite dudit élément formant colonne et ladite cavité comporte une partie inférieure filetée (92) afin de recevoir ledit élément formant broche tout en coopérant avec.

2. Dispositif formant implant dentaire selon la revendication 1, dans lequel ladite tige (32) dudit moyen formant implant de forme est filetée.

3. Dispositif formant implant dentaire selon la revendication 1, dans lequel ladite tige (32") dudit moyen formant implant de forme comporte une pluralité d'éléments formant ailette (30") montée dessus.

4. Dispositif formant implant dentaire selon la revendication 1, dans lequel ladite tige dudit moyen formant implant de forme comporte une rainure hélicoïdale (30'").

5. Dispositif formant implant dentaire selon l'une quelconque des revendications précédentes, dans lequel ladite partie cylindrique (60) présente un diamètre qui est supérieur au diamètre de ladite tige (32).
